# EUROPEAN PATENT SPECIFICATION

(11) **EP 1 829 231 B1**
(45) Date of publication and mention of the grant of the patent: **09.11.2016**
(21) Application number: 05819031.5
(22) Date of filing: 16.12.2005
(51) Int. Cl.: H04B 1/59, G06K 19/077, G06K 19/07

(54) **AN IMPROVED MICROWAVE TRANSPONDER**
VERBESSERTER MIKROWELLEN-TRANSPONDER
TRANSPONDEUR HYPERFREQUENCE AMELIORE

(30) Priority: 21.12.2004 SE 0403098
(43) Date of publication of application: 05.09.2007
(73) Proprietor: Kapsch TrafficCom AB, 551 10 Jönköping (SE)
(72) Inventor: JOHANSSON, Hans, S-461 34 Huskvarna (SE)
(74) Representative: Zacco Sweden AB
(86) International application number: PCT/SE2005/001939
(87) International publication number: WO 2006/068587

(56) References cited:
- WO-A-03/092182
- GB-A- 2 391 435
- US-A- 5 745 049

## Description

### TECHNICAL FIELD

The present invention relates to a radio transponder for reception and retransmission of electromagnetic energy, primarily in the microwave range. The transponder comprises a connector for an antenna, a control circuit for modulation, a detector and also a delay element and a first semiconductor switch.

### BACKGROUND ART

Transponders are devices that are well-known, the principal task of these being to receive and retransmit a received signal, and, if required, also to detect information in the received signal. The retransmission can be carried out with or without a modulation being added to the signal in the transponder before it is retransmitted.

In known transponders that can modulate and detect a received signal, two antennas are used, one for reception and detection and one for retransmission of the modulated signal.

The need for two antennas makes the transponder more expensive, which is, of course, a drawback.

### DISCLOSURE OF THE INVENTION

In accordance with what has been described above, there is thus a need for a transponder that can receive and retransmit a signal using only one antenna, where the retransmitted signal can have been modulated in the transponder. The transponder must preferably be able to be used in the microwave range.

This need is met by the present invention, in that it describes a radio transponder for reception and retransmission of electromagnetic energy, particularly in the microwave range. The transponder comprises a connection to an antenna, a control circuit for modulation, a detector and at least one delay element. In addition the transponder comprises a first semiconductor switch wherein the transponder comprises, in addition, at least a second semiconductor switch, in which the control circuit for modulation is arranged to be able to control the semiconductor switches independently in such a way that a signal that comes in via the antenna connection can be caused to be reflected on either side of said delay element or to pass through this to the detector. The semiconductor switches are connected to separate sides of said delay element and to ground.

At least one of the semiconductor switches is suitably a diode or a transistor.

WO 03/092182 A1 describes a wireless communication RF circuit including a transmitting-and-receiving antenna, a modulator circuit, an SPST (Single Pole Single Throw) switching circuit and a demodulator circuit, which are arranged in a sequence. Only a single antenna is required. However the signal has to pass through the SPST, causing losses. The SPST also requires the use of expensive components such as Field Effect Transistors (FET).

### BRIEF DESCRIPTION OF THE DRAWINGS

The invention will be described in greater detail in the following with reference to the attached drawings, in which
Figure 1 shows a known transponder, and
Figure 2 shows the transponder according to the invention.

### EMBODIMENTS

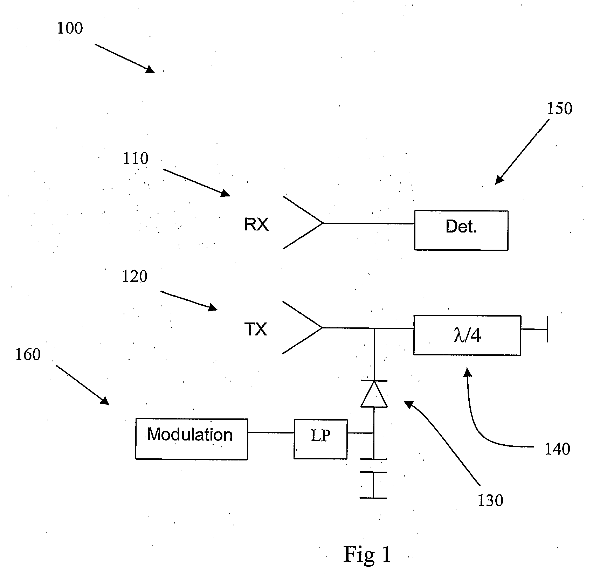

Figure 1 shows a known transponder 100. This will be described briefly, in order to illustrate a problem with this known transponder that can be solved by the invention.

The transponder 100 can be used to receive an incoming signal, and to retransmit this signal, with or without a modulation that is added to the signal in the transponder before the signal is retransmitted.

As shown by Figure 1, the transponder 100 comprises two separate antennas 110 and 120. One antenna 110 is a receiving antenna and is connected to a detector that is used to detect information in the received signal, and the other antenna 120 is a transmitting antenna that is used to retransmit the received signal, with or without an added modulation.

The modulation is controlled by a control circuit for modulation 160 that connects and disconnects a diode 130, in order words makes it conducting or non-conducting. Depending upon whether the diode 130 is caused to be conducting or not, the signal will either be taken through a quarter-wave transformer 140 and reflected to a short circuit, or will be reflected directly at the diode. In the event of reflection through the quarter-wave transformer, the signal will be subjected to a phase shift corresponding to 2*ϕ, where ϕ is the delay in the transformer, in the present case the total phase shift is thus 2*λ/4=*λ*/2*.*

As mentioned in the introduction, a disadvantage of the transponder 100 is that it makes it necessary to utilize two separate antennas, one for detection and one for retransmission of the signal.

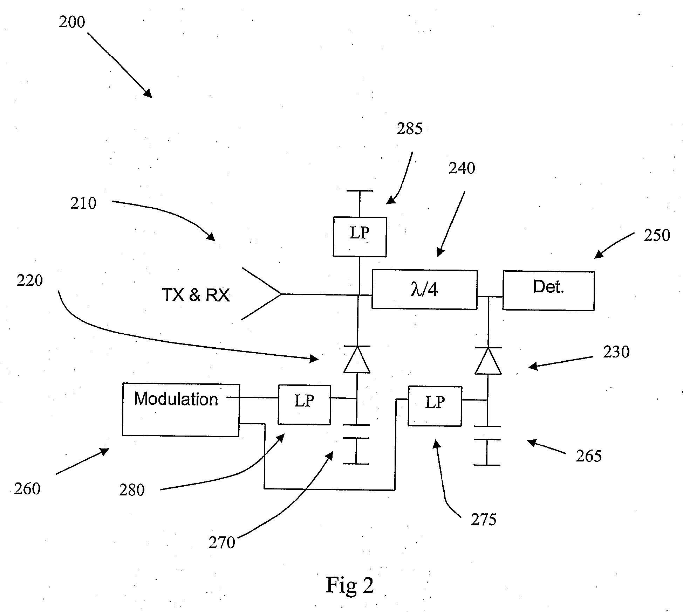

Figure 2 shows a transponder 200 according to the invention which solves the said problem associated with the transponder 100. It can be mentioned here that the transponder 200 is primarily intended for applications in the microwave range, but, with a suitable choice of components, the principle of the transponder 200 can also be used for other frequency ranges. By the microwave range is meant here preferably frequencies from and including 1 GHz upwards.

The transponder 200 comprises a connection 210 to an antenna. The antenna can, of course, be incorporated in the transponder, but can also be an external unit that is connected via the connection 210.

The antenna input 210 is connected in such a way that a received signal is taken to a delay element or phase shifter 240. The delay or phase shift can be selected on the basis of the application, but in the present case an element is used that gives a delay of λ/4, where λ is the central frequency in the area of application for the transponder 200.

A detector 250 is connected in series with the delay element 240, which detector can detect information that is in a received signal.

In addition, the transponder 200 comprises a first 220 and a second 230 semiconductor switch, suitably in the form of diodes, that are connected to separate sides of the delay element 240. The semiconductor switches are also connected to ground, suitably via separate capacitances 270, 265, that block the control signals to the diodes by DC means. In a preferred embodiment, the semiconductor switches consist of diodes, and in the following they will be referred to as diodes, but one or both switches can also consist of transistors. Other types of switches are also possible, for example so-called MEMS switches.

The transponder 200 also comprises a control circuit for modulation 260, which is connected to the two diodes separately, suitably via one low-pass filter 280, 275 per diode. The control circuit can cause the two diodes 220, 230 to be conducting or non-conducting. The following states can then arise:

| **The diode 220** | **The diode 230** | **Result** |
|---|---|---|
| Conducting | Non-conducting | Reflection before the delay element. |
| Non-conducting | Conducting | Reflection after the delay element. |
| Non-conducting | Non-conducting | Signal to the detector. |
| Conducting | Conducting | Reflection before the delay element. |

Thus if the first diode 220 is made conducting, a received signal will be shorted to earth, in other words will be reflected in the diode.

The invention is intended to provide a transponder that can be as inexpensive as possible, which means that there will be a desire to use diodes that are as inexpensive as possible. Inexpensive diodes normally cause reflections in the diode in a conducting state, while more expensive diodes do not produce this reflection. In the latter case, the reflection will take place before the delay element, namely in the capacitance 270 via which the first diode 220 is connected to earth.

If the first diode 220 is made non-conducting and the second diode 230 is made conducting, the signal will be reflected in the same way at a point after the delay element 240, a point that is determined by the quality of the diode, but where both the possible reflection points give the intended result.

If, on the other hand, the control circuit for modulation causes both the diodes to be non-conducting, a received signal will pass through the quarter-wave transformer to the detector 250 for extraction of any information content in the signal.

The control circuit for modulation 260 is suitably connected to each of the diodes via a low-pass filter 275, 280.

As also shown in Figure 2, the first diode 220 is connected to ground via a low-pass filter 285 that passes modulation currents. The first diode is connected to the filter 285 via the same end of the diode that is connected to the input of the quarter-wave transformer.

The invention is not restricted to the embodiments described above, but can be varied freely within the framework of the following claims.

For example, the device can comprise a delay element with, in principle, any delay, entirely dependent upon what total delay is required.

The type of modulation that utilizes the shown phase positions, 0 and 180 degrees, is so-called BPSK. A device according to the invention can also be used for types of modulation that utilize several phase positions, for example so-called QPSK that utilizes four phase positions. In this case, one delay element is required per phase position, plus a diode on each side of each delay element, in a similar way to as shown in Figure 2.

The diodes are utilized by the control device to determine whether the signal is to pass through one, two, three or all four delay elements before it is reflected, whereby the required phase position is obtained. It is recognized that this principle can be varied in a large number of ways, with different numbers of delay elements and diodes.

## Claims

1. Radio transponder (200) for reception and retransmission of electromagnetic energy, particularly in the microwave range, which transponder comprises a connection (210) to an antenna, a control circuit for modulation (260), a detector (250) and at least one delay element (240), in addition comprising a first semiconductor switch (220), **characterized in that** the transponder comprises, in addition, at least a second semiconductor switch (230), in which the control circuit for modulation (260) is arranged to be able to control the semiconductor switches (220, 230) independently in such a way that a signal that comes in via the antenna connection (210) can be caused to be reflected on either side of said delay element (240) or to pass through this to the detector (250), the semiconductor switches being connected to separate sides of said delay element and to ground.

2. Radio transponder (200) according to claim 1, in which at least one of the semiconductor switches (220, 230) consists of a diode.

3. Radio transponder according to claim 1, in which at least one of the semiconductor switches (220, 230) consists of a transistor.

4. Radio transponder (200) according to any one of claims 1-3, which comprises at least a first low-pass filter (275, 280) arranged between the control circuit for modulation (260) and one of the semiconductor switches (220, 230).

5. Radio transponder (200) according to any one of claims 1-4, in which said delay element (240) and the detector (250) are connected in series with the connector (210) for an antenna.

6. Radio transponder (200) according to any one of claims 1-5, in which said delay element (240) provides a delay of a quarter of a wavelength.

7. Method for receiving radio signals primarily in the microwave range in a radio transponder (200) utilizing a connection (210) to a single antenna, the transponder further comprising a detector (250) and at least one delay element (240), **characterized in that** the transponder comprises a control circuit (260) that can bring about one of the following three options for a received signal:
• direct retransmission,
• modulated retransmission and
• detection in a detector
by causing the signal from the antenna to be reflected on either side of said delay element (240) or to pass through the delay element to the detector (250).

8. Method according to claim 7, according to which the control circuit (260) utilizes a first (220) and at least a second (230) semiconductor switch.

9. Method according to claim 7 or 8, according to which the modulation is carried out by means of said delay element (240) through which the signal can be taken by means of said semiconductor switches (220, 230).

10. Method according to any one of claims 7-9, according to which the delay that is obtained by means of the delay element (240) is a quarter of a wavelength.

## Patentansprüche

1. Funktransponder (200) zum Empfangen und Weitergabe elektromagnetischer Energie, insbesondere im Mikrowellenbereich, welcher Transponder eine Verbindung (210) zu einer Antenne, eine Steuerschaltung für Modulation (260), einen Detektor (250) und zumindest ein Verzögerungselement (240) umfasst, zusätzlich umfassend einen ersten Halbleiterschalter (220), **dadurch gekennzeichnet, dass** der Transponder zusätzlich zumindest einen zweiten Halbleiterschalter (230) umfasst, wobei die Steuerschaltung für Modulation (260) so ausgelegt ist, dass sie die Halbleiterschalter (220, 230) unabhängig derart zu steuern im Stande ist, so dass bewirkt werden kann, dass ein über die Antennenverbindung (210) eingehendes Signal auf beiden Seiten des Verzögerungselements (240) reflektiert wird oder durch dieses zum Detektor (250) hin hindurchgeht, wobei die Halbleiterschalter mit einzelnen Seiten des Verzögerungselements und mit der Erde verbunden sind.

2. Funktransponder (200) nach Anspruch 1, wobei zumindest einer der Halbleiterschalter (220, 230) aus einer Diode besteht.

3. Funktransponder nach Anspruch 1, wobei zumindest einer der Halbleiterschalter (220, 230) aus einem Transistor besteht.

4. Funktransponder (200) nach einem der Ansprüche 1 bis 3, welcher zumindest ein erstes zwischen der Steuerschaltung für Modulation (260) und einem der Halbleiterschalter (220, 230) angeordnetes Tiefpassfilter (275, 280) umfasst.

5. Funktransponder (200) nach einem der Ansprüche 1 bis 4, wobei das Verzögerungselement (240) und der Detektor (250) mit dem Konnektor (210) für eine Antenne in Reihe verbunden sind.

6. Funktransponder (200) nach einem der Ansprüche 1 bis 5, wobei das Verzögerungselement (240) eine Verzögerung eines Viertels einer Wellenlänge vorsieht.

7. Verfahren zum Empfangen von Funksignalen hauptsächlich im Mikrowellenbereich in einem Funktransponder (200) durch Verwendung einer Verbindung (210) zu einer Einzelantenne, wobei der Transponder ferner einen Detektor (250) und zumindest ein Verzögerungselement (240) umfasst, **dadurch gekennzeichnet, dass** der Transponder eine Steuerschaltung (260) umfasst, die im Stande ist, eine der folgenden drei Möglichkeiten für ein empfangenes Signal zu realisieren:
• direkte Weitergabe,
• modulierte Weitergabe und
• Detektion in einem Detektor
indem bewirkt wird, dass das Signal von der Antenne auf beiden Seiten des Verzögerungselements (240) reflektiert wird oder durch das Verzögerungselement zum Detektor (250) hin hindurchgeht.

8. Verfahren nach Anspruch 7, wobei die Steuerschaltung (260) einen ersten (220) und zumindest einen zweiten (230) Halbleiterschalter verwendet.

9. Verfahren nach Anspruch 7 oder 8, wobei die Modulation mittels des Verzögerungselements (240) durchgeführt wird, durch welches das Signal mittels der Halbleiterschalter (220, 230) aufgenommen werden kann.

10. Verfahren nach einem der Ansprüche 7 bis 9, wobei die mittels des Verzögerungselements (240) erzielte Verzögerung ein Viertel einer Wellenlänge beträgt.

## Revendications

1. Transpondeur radio (200) pour la réception et la retransmission de l'énergie électromagnétique, notamment dans le domaine de microondes, ledit transpondeur comprenant une connexion (210) à une antenne, un circuit de commande pour la modulation (260), un capteur (250) et au moins un élément de retard (240), en outre comprenant un premier commutateur de semi-conducteur (220), **caractérisé en ce que** le transpondeur comprend en outre au moins un deuxième commutateur de semi-conducteur (230), le circuit de commande pour la modulation (260) étant arrangé de manière à être apte de commander les commutateurs de semi-conducteur (220, 230) indépendamment si bien qu'un signal entrant par l'intermédiaire de la connexion d'antenne (210) peut être amené à être réfléchie aux deux côtés dudit élément de retard (240) ou à passer à travers celui-ci au capteur (250), les commutateurs de semi-conducteur étant connectés à des côtés séparés dudit élément de retard et au sol.

2. Transpondeur radio (200) selon la revendication 1, dans lequel au moins l'un des commutateurs de semi-conducteur (220, 230) est constitué d'une diode.

3. Transpondeur radio selon la revendication 1, dans lequel au moins l'un des commutateurs de semi-conducteur (220, 230) est constitué d'un transistor.

4. Transpondeur radio (200) selon l'une quelconque des revendications 1 à 3, qui comprend au moins un premier filtre passe-bas (275, 280) arrangé entre le circuit de commande pour la modulation (260) et l'un des commutateurs de semi-conducteur (220, 230).

5. Transpondeur radio (200) selon l'une quelconque des revendications 1 à 4, dans lequel ledit élément de retard (240) et le capteur (250) sont reliés en série au connecteur (210) pour une antenne.

6. Transpondeur radio (200) selon l'une quelconque des revendications 1 à 5, dans lequel ledit élément de retard (240) fournit un retard d'un quart d'une longueur d'onde.

7. Procédé de réception de signaux radio notamment dans le domaine de microondes dans un transpondeur radio (200) utilisant une connexion (210) à une seule antenne, ledit transpondeur comprenant en outre un capteur (250) et au moins un élément de retard (240), **caractérisé en ce que** le transpondeur comprend un circuit de commande (260) qui peut apporter l'une des trois options suivantes d'un signal reçu:
• la retransmission directe,
• la retransmission modulée et
• la détection dans un capteur
en amenant le signal venant de l'antenne à être réfléchi sur les deux côtés dudit élément de retard (240) ou à passer à travers l'élément de retard au capteur (250).

8. Procédé selon la revendication 7, dans lequel le circuit de commande (260) utilise un premier (220) et au moins un deuxième (230) commutateur de semi-conducteur.

9. Procédé selon la revendication 7 ou 8, dans lequel la modulation est effectuée au moyen dudit élément de retard (240) par lequel le signal peut être reçu au moyen desdits commutateurs de semi-conducteur (220, 230).

10. Procédé selon l'une quelconque des revendications 7 à 9, dans lequel le retard qui est obtenu au moyen de l'élément de retard (240) est un quart d'une longueur d'onde.
